# EUROPEAN PATENT APPLICATION

(11) **EP 4 102 055 A1**
(43) Date of publication of application: **14.12.2022**
(21) Application number: 21178519.1
(22) Date of filing: 09.06.2021
(51) Int. Cl.: F03D 7/02, F03D 7/04

(54) **RESTORING PRODUCTIVE OPERATION OF A WIND PARK**

(71) Applicant: Siemens Gamesa Renewable Energy A/S, 7330 Brande (DK)
(72) Inventor: Andersen, Martin Folmer, 1722 København (DK); Esbensen, Thomas, 7400 Herning (DK); Hagler, Carla, 7100 Vejle (DK); Hawkins, Samuel, 7100 Vejle (DK)
(74) Representative: SGRE-Association

(57) **Abstract**

There is described a method of restoring productive operation of a wind park from a state where the wind turbines in the wind park are in a downwind orientation and are being powered by rechargeable power supplies, the method comprising selecting (110) a group of wind turbines in the wind park, and turning (120) each wind turbine in the selected group of wind turbines towards an upwind orientation while utilizing power from a rechargeable power supply associated with the corresponding wind turbine and/or utilizing power from at least one rechargeable power supply associated with another wind turbine. Furthermore, a wind park adapted to perform the method is described.

## Description

### Field of Invention

The present invention relates to the field of wind energy, in particular to methods of restoring productive operation of a wind park from a state where the wind turbines in the wind park are in a downwind orientation and are being powered by rechargeable power supplies. The present invention further relates to a wind farm adapted to perform such methods.

### Art Background

An extreme weather event, such as an approaching storm and/or tropical cyclone can cause very high loads on wind turbines. In some cases, it may be advantageous for a normally upwind oriented wind turbine rotor to be adjusted to a downwind orientation. Often, grid power is lost during extreme weather events and in this case the turbines must rely on battery power to yaw downwind and maintain the downwind position during the event and then yaw back upwind when the extreme weather event has passed. When all turbines in the wind park have yawed downwind or are at downwind on battery power there is a risk that when conditions subside, the turbines may not have enough battery power to get back upwind where they can charge the batteries. If the turbines remain downwind to the point where the batteries are depleted, a service call (boat with diesel generator in the case of an offshore wind park) is required to restart the wind turbines. This could be very expensive both in terms of service time and loss of AEP (Annual Energy Production).

Currently, the only way to avoid such situations, is to increase the size of the batteries to an extent where these can handle the expected worst-case duration. This is, however, also a very expensive solution.

Accordingly, there may be a need for more cost-efficient and time-effective ways of handling these situations.

### Summary of the Invention

This need may be met by the subject matter according to the independent claims. Advantageous embodiments of the present invention are set forth in the dependent claims.

According to a first aspect of the invention there is provided a method of restoring productive operation of a wind park from a state where the wind turbines in the wind park are in a downwind orientation and are being powered by rechargeable power supplies. The method comprises (a) selecting a group of wind turbines in the wind park, and (b) turning each wind turbine in the selected group of wind turbines towards an upwind orientation while utilizing power from a rechargeable power supply associated with the corresponding wind turbine and/or utilizing power from at least one rechargeable power supply associated with another wind turbine.

This aspect of the invention is based on the idea that a group of wind turbines in the wind park is selected to be turned back towards the upwind orientation and that the necessary power to perform the turning (yawing) of a selected wind turbine is provided by the rechargeable power supply associated with the corresponding wind turbine and/or by one or more rechargeable power supplies associated with other wind turbines. In other words, only some of the wind turbines in the wind park are turned back into the wind and the power needed for this operation is provided by as many rechargeable power supplies as needed. Once the selected wind turbines have been turned back into the wind, they will be able to generate the power needed to recharge their own and other power supplies and to turn at least some of the remaining wind turbines back into the wind, such that the wind farm can restore its productive operation and be ready to reconnect to the power grid as soon as possible.

In the present context, the term "rechargeable power supply" may in particular denote and kind of rechargeable energy storage, such as rechargeable batteries, capacitor banks, etc. Typically, each single wind turbine in the wind park has its own rechargeable power supply. Alternatively, or additionally, one rechargeable power supply may be shared by two or more wind turbines.

According to an embodiment of the invention, the group of wind turbines is selected from a predefined subset of wind turbines in the wind park, wherein each wind turbine belonging to the predefined subset of wind turbines comprises a rechargeable power supply with larger capacity than the remaining wind turbines in the wind park.

In other words, only wind turbines belonging to the predefined subset of wind turbines are available to be selected for the group of wind turbines. Furthermore, each of these wind turbines has a rechargeable power supply with larger capacity in comparison to the wind turbines that do not belong to the predefined subset of wind turbines.

Hence, the selected group of wind turbines is likely to have more power left in the respective rechargeable power supplies than the remaining wind turbines in the wind park. In this way, the costs can be kept down in comparison to increasing the capacity of all rechargeable power supplies in the wind park.

According to a further embodiment of the invention, the wind turbines in the predefined subset of wind turbines are positioned at locations within the wind park that are expected to receive the largest amount of wind and/or at locations within the wind park that are optimal with regard to supplying/receiving power to/from other wind turbines in the wind park.

In other words, the predefined subset of wind turbines that are available for selection may be positioned at the locations within the wind park where the conditions for producing and/or distributing power are expected to be best. For example, the wind turbines of the predefined subset may be located in the front row towards a prevailing wind direction. Alternatively, if there are variations in the wind direction, the wind turbines of the predefined subset may be located at outer positions in the wind park, i.e., at the border of the wind park, such that for any given wind direction at least some of the wind turbines will not be in the wake of other wind turbines. Furthermore, the wind turbines of the predefined subset may additionally or alternatively be optimally located within the local grid topology to supply / receive power most efficiently to / from the largest number of other turbines.

According to a further embodiment of the invention, the group of wind turbines is selected based on at least one predetermined criterion.

In other words, the group of wind turbines is determined in a dynamic manner in dependency on at least one predetermined criterion which may in particular involve current environmental and/or operating conditions.

According to a further embodiment of the invention, the at least one predetermined criterion comprises remaining power of the rechargeable power supplies, such that the selected group of wind turbines comprises the wind turbines having the most remaining power in their respective rechargeable power supplies.

By selecting those wind turbines that have most remaining power available it is assured that the selected group of wind turbines will require the least amount of power from other wind turbines in the wind park in order to perform the turning (yawing) to the upwind orientation.

According to a further embodiment of the invention, the at least one predetermined criterion comprises the current wind direction.

By basing the selection on a predetermined criterion related to the current wind direction, an important aspect of the current state of the wind park and its individual wind turbines is taken into consideration. This criterion may in particular be used in combination with one or more other criteria, e.g., in order to select a group of wind turbines that are facing the wind direction and therefore capable of producing more power than other wind turbines, as discussed further below.

According to a further embodiment of the invention, the at least one predetermined criterion comprises wind turbine location within the wind park, such that the selected group of wind turbines comprises the wind turbines having the best locations in terms of power production capability. For example, outer wind turbines (i.e., wind turbines located along the periphery of the wind park) will be able to produce more power than inner wind turbines (i.e., wind turbines located inside the wind park and thus surrounded by other wind turbines), at least along the part of the periphery that faces the wind direction.

This criterion assures that the selected wind turbines are the most capable in terms of power production. Thereby, once the selected wind turbines have been turned into the upwind orientation, they will be able to deliver a large amount of power to the remaining wind turbines. It follows that this criterion can also contribute to keeping the number of selected wind turbines down.

According to a further embodiment of the invention, the at least one predetermined criterion comprises wind turbine orientation, such that the selected group of wind turbines comprises the wind turbines that need the least amount of turning to reach the upwind orientation.

This embodiment utilizes the case where one or more wind turbines are not perfectly maintaining the downwind orientation, e.g., due to lack of power to yaw accordingly or due to a sudden change in the wind direction. By selecting the wind turbines that need the least amount of turning, less power and time is necessary for the turning.

According to a further embodiment of the invention, the at least one predetermined criterion comprises wind turbine location within the wind park network topology, such that the selected group of wind turbines comprises the wind turbines with greatest capability to supply/receive power to/from other wind turbines in the wind park.

By applying this criterion in the selection of the group of wind turbines, the utilization of the available/produced power to turn the wind turbines in the selected group and/or the remaining wind turbines can be optimized.

According to a further embodiment of the invention, the at least one predetermined criterion comprises current wind speed, and the number of wind turbines in the selected group of wind turbines is determined in dependency of the current wind speed.

In other words, if the current wind speed is low, such that the wind turbines can only produce a fraction of their rated power, a larger number of wind turbines may be selected than in cases with higher wind speeds.

According to a further embodiment of the invention, the method further comprises operating the wind turbines in the selected group of wind turbines to produce power once the wind turbines have been turned into the upwind orientation.

In other words, as soon as the selected wind turbines have been turned towards the wind, they start producing power, e.g., to supply some or all of the remaining wind turbines in the wind park and/or to recharge their respective rechargeable power supplies.

According to a further embodiment of the invention, the power produced by the wind turbines in the selected group of wind turbines is used to charge one or more rechargeable power supplies and/or to supply one or more wind turbines not belonging to the selected group of wind turbines.

In particular, a further group of wind turbines may be supplied and thereby allowed to turn towards the upwind orientation. This further group of wind turbines may be selected according to similar criteria as discussed above. Once the further group of wind turbines has been turned upwind and start producing power, the additional power may be supplied to yet a further group of wind turbines to also turn these towards the upwind orientation. This process may be repeated until all wind turbines in the wind park have been turned upwind.

According to a second aspect of the invention there is provided a wind park comprising a plurality of wind turbines. The wind park is adapted to perform the method according to the first aspect or any of the above embodiments thereof.

This aspect of the invention is essentially based on the same idea as the first aspect and constitutes a wind park capable of operating the method according to the first aspect to obtain the advantages described above.

According to a further embodiment of the invention, the wind park comprises a central control unit configured to select the group of wind turbines in the wind park and to transmit a control message to each wind turbine in the selected group of wind turbines to initiate the turning of the wind turbine towards the upwind orientation.

In other words, the selection of the group of wind turbines that are to be turned into the upwind orientation is carried out by a central control unit of the wind park.

According to a further embodiment of the invention, all wind turbines, or a predefined subset of the wind turbines in the wind park, are configured to individually determine whether they belong to the selected group of wind turbines.

In this embodiment, the selection of the group of wind turbines is carried out by the wind individual turbines themselves, e.g., applying one or more predetermined criteria to determine whether they belong to the selected group or not in dependency of current environmental and/or operational conditions, such as remaining power, turbine location, turbine orientation, wind direction, and/or wind speed.

The determination may be carried out by all wind turbines in the wind park or only by a predefined subset of the wind turbines in the wind park.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a flowchart of a method according to an embodiment of the present invention.
Figure 2 shows a wind park according to an embodiment of the present invention.
Figure 3 shows a wind park according to another embodiment of the present invention.

### Detailed Description

The illustration in the drawing is schematic. It is noted that in different figures, similar or identical elements are provided with the same reference numerals or with reference numerals which differ only within the first digit.

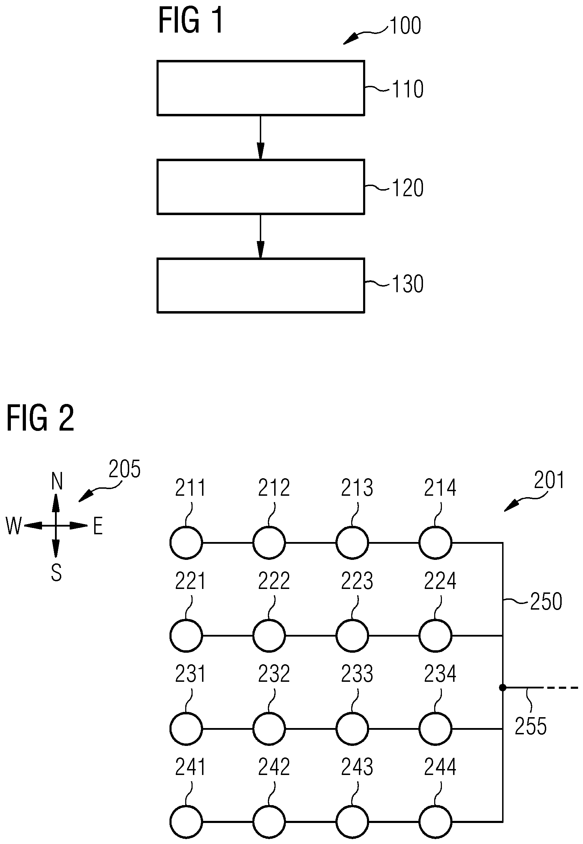

Figure 1 shows a flowchart of a method 100 of restoring productive operation of a wind park from a state where the wind turbines in the wind park are in a downwind orientation and are being powered by rechargeable power supplies. The method begins at 110 with selecting a group of wind turbines in the wind park, e.g., in accordance with one or more predetermined criteria as discussed further below. The method 100 then continues, at 120, by turning each wind turbine in the selected group of wind turbines towards an upwind orientation while utilizing power from a rechargeable power supply associated with the corresponding wind turbine and/or utilizing power from at least one rechargeable power supply associated with another wind turbine. Then, at 130, when the selected group of wind turbines have been turned into the upwind orientation, the wind turbines in the selected group of wind turbines are operated to produce power. This power is used to recharge the power supplies of the wind turbines and to turn all (or at least some of) the remaining wind turbines in the wind park towards the upwind direction. It is noted that in some cases it may be beneficial to not turn all remaining wind turbines towards the upwind orientation and instead select a further group of wind turbines (among the remaining wind turbines) that is turned upwind. The criteria for selecting the further group of wind turbines may be similar to the criteria applied to select the (initial) group of wind turbines. This process can then be repeated as often as necessary until all wind turbines in the wind park have been turned to the upwind orientation. In other words, once the initial group is upwind and producing power, the timing and selection of additional turbines to bring upwind may be based on the same or similar set of criteria and may proceed in a cascade-like manner (each group of selected turbines is larger than the previous) until all remaining downwind turbines have sufficient power to turn upwind. For example: based on wind direction and windspeed, two turbines in front row come upwind first, followed by all remaining front row turbines, followed by all turbines in third row (less waked than second row) and then all turbines in 5^{th} and 7^{th} rows, at which point all remaining downwind turbines have sufficient power to come upwind.

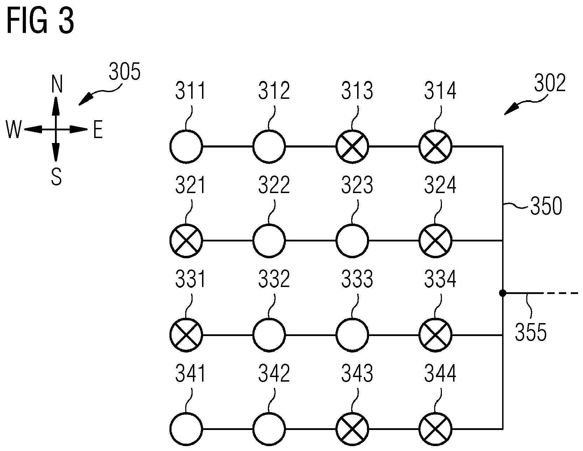

Some of the possible criteria to be applied for selecting the group of wind turbines at 110 will now be discussed in conjunction with two exemplary embodiments of wind parks which are shown respectively in Figure 2 and Figure 3.

Figure 2 shows a wind park 201 according to an exemplary embodiment of the present invention. The wind park 201 is preferably an offshore wind park which benefits the most in terms of reduced costs but may also be an onshore wind park. The exemplary wind park 201 comprises four rows with four wind turbines in each row. Referring also to compass 205, the upper or northern (N) row comprises interconnected wind turbines 211, 212, 213, 214 arranged from west (W) towards east (E). Below the upper row, a second row comprises interconnected wind turbines 221, 222, 223, 224 arranged from west towards east. Further south (S), a third row comprises interconnected wind turbines 231, 232, 233, 234 arranged from west towards east. Finally, at the bottom or far south, a fourth row comprises interconnected wind turbines 241, 242, 243, 244 arranged from west towards east. All four rows are connected to a bus 250 which is furthermore connected to a connector 255 towards a power distribution grid (not shown). It should be emphasized that the wind farm 201 may contain any number of wind turbines, i.e., more or less than the 16 wind turbines shown, and that these may be interconnected by other topologies than the shown row topology, e.g., by a star topology or any other topology known in the art.

The wind park 201 is assumed to be in a state where all wind turbines are in a downwind orientation, i.e., instead of facing the wind as in normal operation, they are turned by 180° to protect the rotor and do consequently not produce any power. Instead, they are relying on rechargeable power supplies, e.g., batteries or capacitors, to drive the yaw system in order to maintain the downwind orientation. Once the condition subsides, the above described method 100 is applied to restore productive operation of the wind park. This is done by selecting a group of wind turbines based on one or more predetermined criteria and turning the selected wind turbines back towards the upwind orientation. The power needed for this turning, i.e., to drive the yaw systems of the selected wind turbines, is provided by the rechargeable power supplies of the selected wind turbines and by the rechargeable power supplies of the wind turbines that do not belong to the selected group of wind turbines. In this way, by turning only a selected subset of the wind turbines, less power is initially needed and once the selected wind turbines are back in the upwind orientation they can start generating power again and thereby supply other wind turbines while they are turning back to the upwind orientation as well as to recharge the power supplies, in particular those that may have been completely depleted while the selected group of wind turbines was turned.

The predetermined criteria may in particular involve one or more of the following:
- Remaining power of the rechargeable power supplies, such that the selected group of wind turbines comprises the wind turbines having the most remaining power in their respective rechargeable power supplies.
- Wind turbine location within the wind park, such that the selected group of wind turbines comprises the wind turbines having the best locations in terms of power production capability, e.g., the wind turbines that are not waked or least waked by other wind turbines with the current wind direction. More specifically, if the wind is coming from the west, the turbines 211, 221, 231, and 241 may be selected. However, if the wind is coming from the north, the wind turbines 211, 212, 213, and 214 may be selected, and so forth.
- Wind turbine orientation, such that the selected group of wind turbines comprises the wind turbines that need the least amount of turning to reach the upwind orientation. In other words, wind turbines that are not perfectly maintaining the downwind orientation, be it due to lack of power to yaw accordingly or due to a sudden change in the wind direction, may be preferred as these will have to be turned less than those wind turbines that are maintaining exact downwind orientation.
- The current wind direction and/or wind speed. The wind speed may be considered in the above criteria. Furthermore, the wind speed may be decisive for the number of wind turbines that are selected. Generally, more turbines will be needed at lower wind speeds than at higher wind speeds.
- Wind turbine location within the wind park network topology, such that the selected group of wind turbines comprises the wind turbines with greatest capability to supply/receive power to/from other wind turbines in the wind park. In other words, if the wind is coming from the south, the turbines 243 and 244 may be selected rather than the turbines 241 and 242 as they are closer to the bus 250 and therefore also electrically closer to the other wind turbines in the wind park 201 than the turbines 241 and 242.

It should be emphasized that in the embodiment shown in Figure 2, all the wind turbines 211, 212, 213, 214, 221, 222, 223, 224, 231, 232, 233, 234, 241, 242, 243, 244 may in principle be selected when applying the criteria discussed above.

Figure 3 shows a wind park 302 according to another embodiment of the present invention. This embodiment mainly differs from the embodiment shown in Figure 2 and discussed above in that only a predefined subset of the wind turbines in the wind park 302 is available for selection. The turbines in the predefined subset may or may not have rechargeable power supplies with larger capacity compared to those of the other turbines in the wind park. More specifically, the wind turbines available for selection are the wind turbines 313, 314, 321, 324, 331, 334, 343, and 344, whereas the wind turbines 311, 312, 322, 323, 332, 333, 341, and 432 are not available for selection. The wind turbines belonging to the predefined subset are generally located on the border of the wind park and close to the bus 350. Hence, depending on the wind direction, some of them will be facing the wind without being waked by other wind turbines and they are electrically as close as possible to the remaining wind turbines.

In some cases, all wind turbines in the predefined subset will always be selected. However, in other cases, some or more of the above-mentioned criteria may be applied to select a group within the predefined subset, i.e., a subset of the predefined subset in dependency on e.g., wind direction and wind speed.

Both the embodiment shown in Figure 2 and the embodiment shown in Figure 3 may involve a central control unit for selecting the group of wind turbines or the selection may be done within the individual wind turbines by comparing parameters, such as the current charging state of the power supply associated with the wind turbine, the wind direction, the turbine orientation, and the wind speed with corresponding pre-stored values in order to determine whether the wind turbine belongs to the selected group of wind turbines or not.

Some wind turbines may have the ability of producing a low amount of power while in the downwind orientation. This ability, if available, may be utilized in the embodiments described above. For instance, if the rechargeable power supply of a remaining wind turbine (i.e., a wind turbine not belonging to the selected group of wind turbines) is completely depleted, it may only receive the amount of power (from the selected group of wind turbines once these start producing power) that is needed to charge the rechargeable power supply to a level where it is capable of yawing to the downwind orientation, which will usually require significantly less power than yawing upwind, and then - utilizing the aforementioned capability - take over the charging of its own rechargeable power supply without receiving additional power from the wind turbines in the selected group of wind turbines. This option is particularly useful in situations where the windspeed is high and there are many depleted wind turbines in the wind park, for example.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of restoring productive operation of a wind park from a state where the wind turbines in the wind park are in a downwind orientation and are being powered by rechargeable power supplies, the method comprising
selecting (110) a group of wind turbines in the wind park, and
turning (120) each wind turbine in the selected group of wind turbines towards an upwind orientation while utilizing power from a rechargeable power supply associated with the corresponding wind turbine and/or utilizing power from at least one rechargeable power supply associated with another wind turbine.

2. The method according to the preceding claim, wherein the group of wind turbines is selected from a predefined subset of wind turbines in the wind park, wherein each wind turbine belonging to the predefined subset of wind turbines comprises a rechargeable power supply with larger capacity than the remaining wind turbines in the wind park.

3. The method according to the preceding claim, wherein the wind turbines in the predefined subset of wind turbines are positioned at locations within the wind park that are expected to receive the largest amount of wind and/or at locations within the wind park that are optimal with regard to supplying/receiving power to/from other wind turbines in the wind park.

4. The method according to any one of the preceding claims, wherein the group of wind turbines is selected based on at least one predetermined criterion.

5. The method according to the preceding claim, wherein the at least one predetermined criterion comprises remaining power of the rechargeable power supplies, such that the selected group of wind turbines comprises the wind turbines having the most remaining power in their respective rechargeable power supplies.

6. The method according to claim 4 or 5, wherein the at least one predetermined criterion comprises the current wind direction.

7. The method according to any one of claims 4 to 6, wherein the at least one predetermined criterion comprises wind turbine location within the wind park, such that the selected group of wind turbines comprises the wind turbines having the best locations in terms of power production capability.

8. The method according to any one of claims 4 to 7, wherein the at least one predetermined criterion comprises wind turbine orientation, such that the selected group of wind turbines comprises the wind turbines that need the least amount of turning to reach the upwind orientation.

9. The method according to any one of claims 4 to 8, wherein the at least one predetermined criterion comprises wind turbine location within the wind park network topology, such that the selected group of wind turbines comprises the wind turbines with greatest capability to supply/receive power to/from other wind turbines in the wind park.

10. The method according to any one of claims 4 to 9, wherein the at least one predetermined criterion comprises current wind speed, and wherein the number of wind turbines in the selected group of wind turbines is determined in dependency of the current wind speed.

11. The method according to any one of the preceding claims, further comprising operating (130) the wind turbines in the selected group of wind turbines to produce power once the wind turbines have been turned into the upwind orientation.

12. The method according to the preceding claim, wherein the power produced by the wind turbines in the selected group of wind turbines is used to charge one or more rechargeable power supplies and/or to supply one or more wind turbines not belonging to the selected group of wind turbines.

13. A wind park comprising a plurality of wind turbines, wherein the wind park is adapted to perform the method according to any one of the preceding claims.

14. The wind park according to the preceding claim, the wind park comprising a central control unit configured to select the group of wind turbines in the wind park and to transmit a control message to each wind turbine in the selected group of wind turbines to initiate the turning of the wind turbine towards the upwind orientation.

15. The wind park according to claim 13, wherein all wind turbines or a predefined subset of the wind turbines in the wind park are configured to individually determine whether they belong to the selected group of wind turbines.
